# EUROPÄISCHE PATENTANMELDUNG

(11) **EP 3 569 345 A1**
(43) Veröffentlichungstag der Anmeldung: **20.11.2019**
(21) Anmeldenummer: 18020387.9
(22) Anmeldetag: 14.08.2018
(51) Int. Cl.: B23K 9/28

(54) **ERSATZTEILEWECHSEL OHNE WASSERAUSTRITT**

(30) Priorität: 15.05.2018 DE 102018003886
(71) Anmelder: Linde Aktiengesellschaft, 80331 München (DE)
(72) Erfinder: Siewert, Erwan, 85283 Niederlauterbach (DE)

(57) **Zusammenfassung**

Die Erfindung betrifft ein Verfahren zum Austauschen bzw. Wiedereinsetzen einer direkt mittels eines fluiden Kühlmittels (K) gekühlten Komponente (3) eines Schweißbrenners (2), wobei das Kühlmittel (K) vor dem Austauschen bzw. Entfernen der Komponente (3) aus einem sich durch die Komponente (3) erstreckenden Kühlmittelpfad (5) durch Einleiten eines Gasstroms (G) in den Kühlmittelpfad (5) entfernt wird und die Komponente (3) nach dem Entfernen des Kühlmittels (K) aus dem besagten Kühlmittelpfad (5) gegen eine (insbesondere identische) Austauschkomponente ausgetauscht wird oder wieder eingesetzt wird. Weiterhin betrifft die Erfindung eine Schweißeinrichtung (1).

## Beschreibung

Die Erfindung betrifft ein Verfahren zum Entfernen (insbesondere Austauschen) einer Komponente eines Schweißbrenners sowie eine Schweißeinrichtung mit einer solchen austauschbaren bzw. entfernbaren Komponente.

Bei Schweißbrennern wird zwischen direkt gekühlten und indirekt gekühlten Brennern unterschieden. Eine direkte Kühlung wird eingesetzt, wenn der Brenner einer hohen thermischen Belastung ausgesetzt ist und daher eine sehr effektive Kühlung notwendig ist. Bei einer direkten Kühlung hat das hoch belastete Bauteil einen direkten Kontakt mit dem Kühlmittel. In der Regel wird als Kühlmittel Wasser mit Zusätzen verwendet.

Beispiele für direkt gekühlte Brenner sind z.B. Plasmabrenner. Hierbei werden zumeist die Plasmagasdüse und die Schutzgasdüse direkt gekühlt. Weiterhin kann auch die Elektrode direkt gekühlt werden.

Bei einem direkt gekühlten Schweißbrenner besteht das Problem, dass bei einem Entfernen der Komponente (z.B. beim Austauschen der Komponente) Wasser bzw. Kühlmittel austritt. Insbesondere wenn das Schlauchpaket oder sogar das Kühlsystem ungünstig positioniert werden, kann eine große Menge an Kühlmittel bzw. Wasser auslaufen. Das hat zur Folge, dass Bauteile wieder getrocknet werden müssen. Insbesondere beim Schweißen von Aluminium ist der Wasseraustritt kritisch, da dieser zur Porenbildung führen kann.

Der vorliegenden Erfindung liegt daher die Aufgabe zugrunde, ein Verfahren zum Entfernen, insbesondere Austauschen, einer Komponente eines Schweißbrenners bereitzustellen, das hinsichtlich der oben genannten Problematik verbessert ist.

Diese Aufgabe wird durch ein Verfahren mit den Merkmalen des Anspruchs 1 sowie durch einen Schweißbrenner mit den Merkmalen des Anspruchs 11 gelöst. Vorteilhafte Ausgestaltungen dieser Erfindungsaspekte sind in den entsprechenden Unteransprüchen angegeben und/oder werden weiter unten beschrieben.

Gemäß Anspruch 1 wird ein Verfahren zum Entfernen, insbesondere Austauschen, einer direkt mittels eines fluiden Kühlmittels gekühlten Komponente eines Schweißbrenners offenbart, wobei das Kühlmittel vor dem Entfernen der Komponente aus einem sich durch die Komponente erstreckenden Kühlmittelpfad durch Einleiten eines Gasstroms in den Kühlmittelpfad im Wesentlichen entfernt wird und die Komponente nach einem Entfernen von Kühlmittel aus dem besagten Kühlmittelpfad vom Schweißbrenner entfernt wird und insbesondere gegen eine (insbesondere identische) Austauschkomponente ausgetauscht wird, die dann am Schweißbrenner angeordnet bzw. festgelegt wird, oder wobei insbesondere dieselbe Komponente (insbesondere nach einer Überprüfung und/oder Reinigung der Komponente) wieder am Schweißbrenner angeordnet bzw. festgelegt wird.

Der Kühlmittelpfad und/oder die Komponente kann insbesondere vollständig getrocknet werden (insbesondere durch den Gasstrom bzw. nach dem Einleiten des Gasstroms).

Das Kühlmittel kann z.B. durch Wasser gebildet sein oder kann Wasser aufweisen (insbesondere als größten Bestandteil) sowie ggf. einen oder mehrere Zusätze.

Bei der zu entfernenden bzw. auszutauschenden Komponente kann es sich z.B. um eine Elektrode des Schweißbrenners, eine Plasmagasdüse oder um eine Schutzgasdüse des Schweißbrenners handeln. Es ist auch denkbar, eine andere oder mehrere der direkt gekühlten Komponenten bei dem Verfahren zu entfernen bzw. gegen entsprechende Austauschkomponenten (Ersatzteile) auszutauschen.

Gemäß einer Ausführungsform des erfindungsgemäßen Verfahrens ist vorgesehen, dass der Gasstrom durch Druckluft gebildet ist oder durch ein Prozessgas, dass ansonsten während eines Betriebs des Schweißbrenners zum Schweißen verwendet wird (z.B. Schutzgas, Plasmagas oder Fokussiergas). D.h. mit anderen Worten, dass der Gasstrom bzw. ein entsprechendes Gas vor dem Entfernen/Austauschen und/oder nach dem Entfernen/Austauschen der entfernbaren bzw. austauschbaren Komponente zum Schweißen oder Schneiden eines Werkstücks verwendet wird.

Weiterhin ist gemäß einer Ausführungsform des erfindungsgemäßen Verfahrens vorgesehen, dass der Kühlmittelpfad stromauf der zu entfernenden bzw. auszutauschenden Komponente über ein erstes Ventil mit einem Kühlmittelvorlauf eines Kühlsystems oder einer Gasquelle zum Bereitstellen des Gasstroms verbindbar ist, wobei das erste Ventil nach einem Ende eines Schweißvorgangs und vor dem Entfernen (insbesondere Austauschen) der Komponente umgeschaltet wird, so dass der Kühlmittelpfad für das Kühlmittel gesperrt wird und der Gasstrom über das erste Ventil in den Kühlmittelpfad eingeleitet wird, so dass Kühlmittel aus der zu entfernenden bzw. auszutauschenden Komponente bzw. aus dem besagten Kühlmittelpfad, insbesondere aus dem gesamten Schweißbrenner, in einen Kühlmittelbehälter des Kühlsystems gedrückt wird (und zwar insbesondere über ein zweites Ventil stromab der zu entfernenden bzw. auszutauschenden Komponente, über das der Kühlmittelpfad mit einem Kühlmittelrücklauf des Kühlsystems oder mit einem weiteren Gasweg verbindbar ist, siehe auch unten).

Das Kühlsystem kann ein geschlossenes Kühlsystem sein. Für diesen Fall kann das Kühlmittel mittels des Gasstroms zunächst in einen Kühlmittelbehälter in Form eines Überdruckgefäßes gedrückt werden.

Weiterhin ist gemäß einer Ausführungsform des erfindungsgemäßen Verfahrens vorgesehen, dass der Kühlmittelpfad stromab der auszutauschenden Komponente über ein zweites Ventil mit einem Kühlmittelrücklauf oder einem weiteren Gasweg verbindbar ist, wobei nach dem besagten Umschalten des ersten Ventils (insbesondere nach Ablauf einer vordefinierten Zeitspanne) das zweite Ventil umgeschaltet wird, so dass die zu entfernende bzw. auszutauschende Komponente vom Kühlmittelrücklauf abgetrennt ist (der Schweißbrenner wird hierbei insbesondere komplett vom Kühlsystem getrennt) und der zugeführte Gasstrom aus der zu entfernenden bzw. auszutauschende Komponente über den weiteren Gasweg entweichen kann.

Somit kann der Gasstrom jegliche in der auszutauschenden Komponente verbliebene Restfeuchte aufnehmen und abführen.

Weiterhin ist gemäß einer Ausführungsform des erfindungsgemäßen Verfahrens vorgesehen, dass das erste Ventil durch ein Dreiwegeventil gebildet ist, und/oder dass das zweite Ventil durch ein Dreiwegeventil gebildet ist.

Weiterhin ist gemäß einer bevorzugten Ausführungsform des erfindungsgemäßen Verfahrens vorgesehen, dass der Gasstrom nach einer vordefinierten Zeitspanne gestoppt wird und einem Bediener automatisch ein Signal angezeigt wird, dass die mindestens eine Komponente entfernt werden kann bzw. (gegen eine Austauschkomponente bzw. ein Ersatzteil) ausgetauscht werden kann.

Bei dem Signal kann es sich z.B. um ein optisches und/oder akustisches Signal handeln. Ein haptisches Signal ist ebenfalls denkbar (z.B. Vibration des Schweißbrenners).

Weiterhin ist gemäß einer Ausführungsform vorgesehen, dass nach einem Austauschen oder Wiedereinsetzen der Komponente die beiden Ventile wieder umgeschaltet werden, so dass ein sich durch die Austauschkomponente bzw. wieder eingesetzte Komponente erstreckender Kühlmittelpfad mit dem Kühlmittelvorlauf und dem Kühlmittelrücklauf des Kühlsystems strömungsverbunden ist und die (Austausch)komponente mittels des Kühlmittels wieder direkt kühlbar ist.

Mit anderen Worten wird also insbesondere der Schweißbrenner durch Umschalten der Ventile wieder mit dem Kühlsystem verbunden.

Je nach Schweißbrennertyp können unterschiedliche Zeitabläufe hinterlegt sein, welche eine möglichst schnelle und sichere Rücktrocknung ermöglichen.

Das Schalten der Ventile kann weiterhin mit dem Ein- und Abschalten des Kühlersystems synchronisiert sein.

Weiterhin können unterschiedliche Eingangsdrücke oder zeitlich variable Eingangsdrücke verwendet werden. So kann z.B. am Anfang das Wasser bzw. das Kühlmittel vorsichtig durch einen vergleichsweise geringen Gasdruck in den Kühler bzw. das Kühlsystem gedrückt werden, wobei nach dem Schalten des zweiten Ventils mittels eines kräftigeren Gasstoßes möglichst viel Restwasser bzw. -kühlmittel entfernt werden kann (hoher Druck). Gegen Ende kann des Weiteren über einen vergleichsweise geringen Druck ein geringerer Fluss eingestellt werden, um über eine längere Zeit kontinuierlich Restfeuchte aufzunehmen.

Um das Risiko einer Beschädigung einer verwendeten Pumpe zu verringern, kann des Weiteren das Kühlsystem vor einem Rücktrocknen abgeschaltet werden. Alternativ hierzu kann eine Strömungsverbindung im Kühlsystem derart hergestellt werden, dass das Kühlmittel vor den Ventilen weiter im Kreis gepumpt werden kann.

Weiterhin ist gemäß einer Ausführungsform des erfindungsgemäßen Verfahrens vorgesehen, dass der Gasstrom vor einem Einleiten in den Kühlmittelpfad der zu entfernenden bzw. auszutauschenden Komponente vorgetrocknet und / oder erwärmt wird, um insbesondere die Rücktrocknung zu verbessern.

Eine Kopplung mit der den Schweißbrenner aufweisenden Schweißeinrichtung ermöglicht insbesondere einen vollautomatischen Ablauf und eine Synchronisation mit dem Schweißstart und Ende.

Weiterhin ist gemäß einer Ausführungsform der Erfindung vorgesehen, dass die Schweißeinrichtung bzw. der Schweißbrenner erst wieder gestartet werden kann bzw. wird, wenn die Ventile den Kühlmittelfluss durch den Kühlmittelpfad der Komponente bzw. Austauschkomponente freigeben.

Die beiden Ventile sind gemäß einer Ausführungsform bevorzugt benachbart zum Schweißbrenner angeordnet oder sind in den Schweißbrenner integriert, insbesondere um das zu trocknende Volumen möglichst gering zu halten.

Bei den beiden Ventilen handelt es sich bevorzugt um Miniaturventile, um eine Platzierung am oder im Schweißbrenner zu vereinfachen und um den zusätzlich notwendigen Bauraum zu minimieren.

Ein weiterer Aspekt der vorliegenden Erfindung betrifft eine Schweißeinrichtung, insbesondere zur Verwendung bei dem hierin beschriebenen erfindungsgemäßen Verfahren zum Entfernen, insbesondere Austauschen, einer Komponente eines Schweißbrenners der Schweißeinrichtung.

Die erfindungsgemäße Schweißeinrichtung weist einen Schweißbrenner mit einer entfernbaren bzw. austauschbaren Komponente auf, durch die sich ein Kühlmittelpfad der Schweißeinrichtung erstreckt, so dass die Komponente direkt mittels eines in dem Kühlmittelpfad geführten fluiden Kühlmittels kühlbar ist, wobei die Schweißeinrichtung stromauf der austauschbaren Komponente ein erstes Ventil aufweist, über das der Kühlmittelpfad mit einem Kühlmittelvorlauf eines Kühlsystems der Schweißeinrichtung oder einer Gasquelle der Schweißeinrichtung zum Einleiten eines Gasstroms in den Kühlmittelpfad verbindbar ist, wobei das erste Ventil (insbesondere nach einem Ende eines Schweißvorgangs und vor einem Austauschen der Komponente) derart umschaltbar ist, dass der Kühlmittelpfad für das Kühlmittel gesperrt wird und ein Gasstrom über das erste Ventil aus der Gasquelle in den Kühlmittelpfad einleitbar ist, so dass Kühlmittel aus der entfernbaren bzw. austauschbaren Komponente (bzw. aus dem besagten Kühlmittelpfad, insbesondere aus dem gesamten Schweißbrenner) in einen Kühlmittelbehälter des Kühlsystems der Schweißeinrichtung oder ein Überdruckgefäß drückbar ist, und wobei der Kühlmittelpfad stromab der austauschbaren Komponente über ein zweites Ventil mit einem Kühlmittelrücklauf des Kühlsystems oder einem weiteren Gasweg der Schweißeinrichtung verbindbar ist, wobei das zweite Ventil derart umschaltbar ist, dass die entfernbare bzw. austauschbare Komponente vom Kühlmittelrücklauf abgetrennt ist und der in den Kühlmittelpfad eingeleitete Gasstrom aus der entfernbaren bzw. austauschbaren Komponente über den weiteren Gasweg entweichen kann.

Weiterhin ist gemäß einer Ausführungsform der erfindungsgemäßen Schweißeinrichtung vorgesehen, dass das erste Ventil ein Dreiwegeventil ist, und/oder dass das zweite Ventil ein Dreiwegeventil ist.

Weiterhin ist gemäß einer Ausführungsform der Erfindung müssen Schweißeinrichtung vorgesehen, dass das erste und/oder das zweite Ventil in den Schweißbrenner integriert ist bzw. sind.

Aufgrund des erfindungsgemäßen Verfahrens bzw. der erfindungsgemäßen Schweißeinrichtung ist es möglich, eine entfernbare bzw. austauschbare Komponente eines Schweißbrenners der Schweißeinrichtung zu entfernen bzw. auszutauschen, ohne dabei einen wesentlichen Kühlmittelverlust zu erleiden. Weiterhin entfallen hierdurch aufwändige Reinigungsarbeiten und es wird insbesondere beim Schweißen von Aluminium die eingangs beschriebene Porenproblematik vermieden.

Ferner wird durch die Erfindung eine Kondensation der Luftfeuchte an Komponenten des Schweißbrenners vermieden, wenn der Lichtbogen ausgeschaltet wird. Insbesondere bei hohen Temperaturen und einer hohen Luftfeuchtigkeit kommt es sonst zur Kondensation der Luftfeuchtigkeit an kühlen Oberflächen. Das Rücktrocknen des Brenners ist in diesem Fall vorzugsweise mit dem Ausschalten des Lichtbogens synchronisiert.

Nachfolgend sollen weitere Merkmale sowie Ausführungsformen der vorliegenden Erfindung anhand der Figur erläutert werden. Es zeigt:

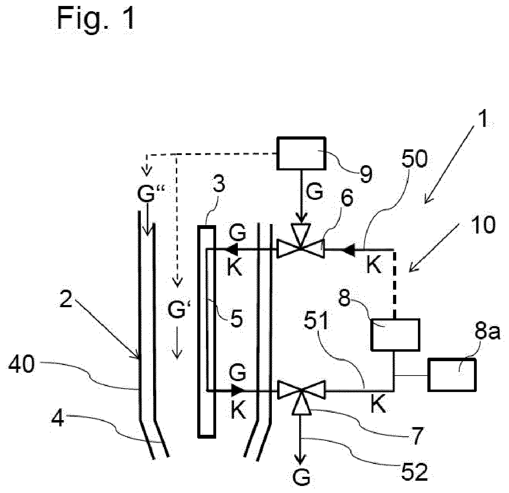

- Fig. 1: eine schematische Darstellung einer Ausführungsform einer erfindungsgemäßen Schweißeinrichtung bzw. eines erfindungsgemäßen Verfahrens zum Entfernen bzw. Austauschen einer Komponente der Schweißeinrichtung.

Figur 1 zeigt eine schematische Darstellung einer Ausführungsform einer erfindungsgemäßen Schweißeinrichtung 1, bei der sich eine entfernbare bzw. austauschbare Komponente 3, hier in Form einer Elektrode 3 eines Schweißbrenners 2 der Einrichtung 1, die beim Schweißen direkt mit einem Kühlmittel K gekühlt wird, von dem Schweißbrenner entfernen lässt und insbesondere gegen eine Austauschkomponente austauschen lässt, und zwar ohne ein unbeabsichtigtes Austreten des Kühlmittels K.

Der Schweißbrenner 2 weist weiterhin eine Plasmagasdüse 4 auf, die sich koaxial zur Elektrode 3 erstreckt und zusammen mit dieser einen Kanal für ein Plasmagas G' bildet. Weiterhin kann der Schweißbrenner 2 eine Schutzgasdüse 40 aufweisen, die sich wiederum koaxial zur Elektrode 3 sowie zur Plasmagasdüse 4 erstreckt, so dass ein Kanal zum Führen eines Schutzgases G" zwischen der Schutzgasdüse 40 und der Plasmagasdüse 4 gebildet wird. Es ist vorliegend auch denkbar, anstelle der Elektrode 3 eine der Düsen 4, 40 (oder beide Düsen 4, 40) direkt mit einem Kühlmittel zu kühlen bzw. zu entfernen und insbesondere gegen eine Austauschdüse auszutauschen. Durch die Elektrode 3 erstreckt sich zum direkten Kühlen der Elektrode 3 mit dem Kühlmittel K ein Kühlmittelpfad 5, wobei die Schweißeinrichtung 1 stromauf der entfernbaren bzw. austauschbaren Komponente 3 ein erstes Ventil 6 aufweist, hier in Form eines Dreiwegeventils 6, über das der Kühlmittelpfad 5 mit einem Kühlmittelvorlauf 50 eines Kühlsystems 10 der Schweißeinrichtung 1 oder mit einer Gasquelle 9 der Schweißeinrichtung zum Einleiten eines Gasstroms G in den Kühlmittelpfad 5 verbindbar ist. Bei dem Gasstrom G kann es sich dabei insbesondere auch um ein Prozessgas handeln, wie zum Beispiel das Plasmagas G' oder das Schutzgas G".

Das erste Ventil 6 ist nun (nach einem Ende eines Schweißvorgangs und vor einem Entfernen bzw. Austauschen der Komponente 3) derart umschaltbar, dass der Kühlmittelpfad 5 für das Kühlmittel K gesperrt wird und der Gasstrom G über das erste Ventil 6 aus der Gasquelle 9 in den Kühlmittelpfad 5 einleitbar ist, so dass in der Komponente 3 befindliches Kühlmittel K aus der Komponente 3 in einen Kühlmittelbehälter 8 des Kühlsystems 10 der Schweißeinrichtung 1 drückbar ist. Bei dem Kühlsystem 10 kann es sich um ein geschlossenes System handelt. Zusätzlich zu dem Kühlmittelbehälter 8 kann ein Überdruckgefäß 8a vorhanden sein, in das das Kühlmittel K gedrückt werden kann.

Weiterhin ist vorgesehen, dass der Kühlmittelpfad 5 stromab der austauschbaren Komponente 3 über ein zweites Ventil 7, hier ebenfalls in Form eines Dreiwegeventils 7, mit einem Kühlmittelrücklauf 51 des Kühlsystems 10 oder einem weiteren Gasweg 52 der Schweißeinrichtung 1 verbindbar ist, wobei das zweite Ventil 7 derart umschaltbar ist, dass die Komponente 3 vom Kühlmittelrücklauf 51 abgetrennt ist und ein in den Kühlmittelpfad 5 über das erste Ventil 6 eingeleiteter Gasstrom G aus der Komponente 3 über den weiteren Gasweg 52 entweichen kann. Hierdurch kann sämtliche Restfeuchte aus der zu entfernenden bzw. auszutauschenden Komponente 3 entfernt werden.

Die solchermaßen von Kühlmittel K befreite Komponente kann dann gegen eine Austauschkomponente (hier Elektrode 3) ausgetauscht werden, wobei nach dem Austauschen der Komponente 3 die beiden Ventile 6, 7 wieder umgeschaltet werden, so dass ein sich durch die Austauschkomponente erstreckender Kühlmittelpfad 5 mit dem Kühlmittelvorlauf 50 und dem Kühlmittelrücklauf 51 des Kühlsystems 10 strömungsverbunden ist und die Austauschkomponente 3 nunmehr mittels des Kühlmittels K wieder direkt kühlbar ist, um einen Schweißvorgang durchzuführen. Es ist auch denkbar, dieselbe Komponente 3, z.B. nach einem Überprüfen und/oder Überarbeiten (z.B. Reinigen), wieder an dem Schweißbrenner 2 anzuordnen und weiter zu verwenden.

## Patentansprüche

1. Verfahren zum Entfernen einer direkt mittels eines fluiden Kühlmittels (K) gekühlten Komponente (3) eines Schweißbrenners (2), wobei das Kühlmittel (K) vor dem Entfernen der Komponente (3) aus einem sich durch die Komponente (3) erstreckenden Kühlmittelpfad (5) durch Einleiten eines Gasstroms (G) in den Kühlmittelpfad (5) entfernt wird und die Komponente (3) nach dem Entfernen des Kühlmittels (K) aus dem besagten Kühlmittelpfad (5) vom Schweißbrenner (2) entfernt wird.

2. Verfahren nach Anspruch 1, **dadurch gekennzeichnet, dass** die entfernte Komponente (3) gegen eine Austauschkomponente (3) ausgetauscht wird, die dann anstelle der Komponente (3) am Schweißbrenner (2) angeordnet wird, oder dass die entfernte Komponente (3) wieder am Schweißbrenner (2) angeordnet wird.

3. Verfahren nach Anspruch 1 oder 2, **dadurch gekennzeichnet, dass** der Gasstrom (G) Druckluft ist, oder dass der Gasstrom ein Prozessgas ist, das während eines Betriebs des Schweißbrenners (2) verwendet wird.

4. Verfahren nach einem der vorhergehenden Ansprüche, **dadurch gekennzeichnet, dass** der Kühlmittelpfad (5) stromauf der zu entfernenden Komponente (3) über ein erstes Ventil (6) mit einem Kühlmittelvorlauf (50) eines Kühlsystems (10) oder einer Gasquelle (9) zum Bereitstellen des Gasstroms (G) verbindbar ist, wobei das erste Ventil (6) nach einem Ende eines Schweißvorgangs und vor dem Entfernen der Komponente (3) umgeschaltet wird, so dass der Kühlmittelpfad (5) für das Kühlmittel (K) abgesperrt wird und der Gasstrom (G) über das erste Ventil (6) in den Kühlmittelpfad (5) eingeleitet wird, so dass Kühlmittel (K) aus der zu entfernenden Komponente (3) in einen Kühlmittelbehälter (8) des Kühlsystems (10) oder in ein Überdruckgefäß (8a) gedrückt wird.

5. Verfahren nach Anspruch 4, **dadurch gekennzeichnet, dass** der Kühlmittelpfad (5) stromab der zu entfernenden Komponente (3) über ein zweites Ventil (7) mit einem Kühlmittelrücklauf (51) oder einem weiteren Gasweg (52) verbindbar ist, wobei nach dem besagten Umschalten des ersten Ventils (6) das zweite Ventil (7) umgeschaltet wird, so dass die zu entfernende Komponente (3) vom Kühlmittelrücklauf (51) abgetrennt ist und der zugeführte Gasstrom (G) aus der zu entfernenden Komponente (3) über den weiteren Gasweg (52) entweichen kann.

6. Verfahren nach Anspruch 4 oder 5, **dadurch gekennzeichnet, dass** das erste Ventil (6) ein Dreiwegeventil ist, und/oder dass das zweite Ventil (7) ein Dreiwegeventil ist.

7. Verfahren nach einem der vorhergehenden Ansprüche, **dadurch gekennzeichnet, dass** der Gasstrom (G) nach einer vordefinierten Zeitspanne gestoppt wird und einem Bediener automatisch ein Signal gegeben wird, dass die Komponente (3) entfernt werden kann.

8. Verfahren nach Anspruch 2 oder einem der Ansprüche 3 bis 7 soweit rückbezogen auf Anspruch 2, **dadurch gekennzeichnet, dass** nach dem Anordnen der Austauschkomponente (3) oder der Komponente (3) am Schweißbrenner (2) die beiden Ventile (6, 7) wieder umgeschaltet werden, so dass ein sich durch die Austauschkomponente (3) oder die Komponente (3) erstreckender Kühlmittelpfad (5) mit dem Kühlmittelvorlauf (50) und dem Kühlmittelrücklauf (51) des Kühlsystems (10) strömungsverbunden ist und die Austauschkomponente (3) oder die Komponente (3) mittels des Kühlmittels (K) direkt kühlbar ist.

9. Verfahren nach einem der vorhergehenden Ansprüche, **dadurch gekennzeichnet, dass** der Gasstrom (G) vor einem Einleiten in den Kühlmittelpfad (5) der zu entfernenden Komponente (3) vorgetrocknet und / oder erwärmt wird.

10. Verfahren nach einem der vorhergehenden Ansprüche, **dadurch gekennzeichnet, dass** die zu entfernende Komponente eine der folgenden Komponenten ist: eine Elektrode (3), eine Plasmagasdüse (4), eine Schutzgasdüse (40).

11. Schweißeinrichtung (1) aufweisend einen Schweißbrenner (2) mit einer entfernbaren Komponente (3), durch die sich ein Kühlmittelpfad (5) der Schweißeinrichtung (1) erstreckt, so dass die Komponente (3) direkt mittels eines in dem Kühlmittelpfad (5) geführten fluiden Kühlmittels (K) kühlbar ist, wobei die Schweißeinrichtung (1) stromauf der entfernbaren Komponente (3) ein erstes Ventil (6) aufweist, über das der Kühlmittelpfad (5) mit einem Kühlmittelvorlauf (50) eines Kühlsystems (10) der Schweißeinrichtung (1) oder mit einer Gasquelle (9) der Schweißeinrichtung (1) zum Einleiten eines Gasstroms (G) in den Kühlmittelpfad (5) verbindbar ist, wobei das erste Ventil (6) derart umschaltbar ist, dass der Kühlmittelpfad (5) für das Kühlmittel (K) gesperrt wird und ein Gasstrom (G) über das erste Ventil (6) aus der Gasquelle (9) in den Kühlmittelpfad (5) einleitbar ist, so dass Kühlmittel (K) aus der zu entfernenden Komponente (3) in einen Kühlmittelbehälter (8) des Kühlsystems (10) der Schweißeinrichtung (1) oder in ein Überdruckgefäß (8a) drückbar ist, und wobei der Kühlmittelpfad (5) stromab der entfernbaren Komponente (3) über ein zweites Ventil (7) mit einem Kühlmittelrücklauf (51) des Kühlsystems (10) oder einem weiteren Gasweg (52) der Schweißeinrichtung (1) verbindbar ist, wobei das zweite Ventil (7) derart umschaltbar ist, dass die entfernbare Komponente (3) vom Kühlmittelrücklauf (51) abgetrennt ist und ein in den Kühlmittelpfad (5) eingeleiteter Gasstrom (G) aus der entfernbaren Komponente (3) über den weiteren Gasweg (52) entweichen kann.

12. Schweißeinrichtung nach Anspruch 11, **dadurch gekennzeichnet, dass** das erste Ventil (6) ein Dreiwegeventil ist, und/oder dass das zweite Ventil (7) ein Dreiwegeventil ist.

13. Schweißeinrichtung nach Anspruch 11 oder 12, **dadurch gekennzeichnet, dass** das erste und/oder das zweite Ventil (6, 7) in den Schweißbrenner (2) integriert sind.
